# EUROPEAN PATENT APPLICATION

(11) **EP 4 439 297 A1**
(43) Date of publication of application: **02.10.2024**
(21) Application number: 23305417.0
(22) Date of filing: 27.03.2023
(51) Int. Cl.: G06F 9/50

(54) **METHOD AND SYSTEM FOR RELEASING RESOURCES OF HIGH-PERFORMANCE COMPUTATION SYSTEM**

(71) Applicant: BULL SAS, 78340 Les Clayes-Sous-Bois (FR)
(72) Inventor: SEROUL, PIERRE, 38650 Sinard (FR); BOUZON, LIONEL, 38830 Crêts-En-Belledonne (FR); JOUFFRAY, TITOUAN, 38000 GRENOBLE (FR)
(74) Representative: Cabinet Camus Lebkiri

(57) **Abstract**

According to an aspect of the invention, it is provided a method for releasing resources in a high-performance computer, the high-performance computer comprising at least one node, each node comprising at least one resource and being associated with at least one metric, each metric taking values within a range of values divided into a plurality of sub-ranges of values, the method comprising:
- For each node comprising a resource allocated to the job:
o For each metric associated with the node:
▪ Obtaining a set of samples;
▪ Counting, for each sub-range of values the number of samples whose values are comprised within said sub-range of values, in order to obtain a plurality of counted numbers;

- Determining, using at least one machine learning model, from the plurality of counted numbers, whether the job is active or inactive;
- If the job is determined as inactive, emitting a termination command to terminate the job and release each resource allocated to the job.

## Description

### TECHNICAL FIELD

The technical field of the invention is the one of high-performance computation. The present invention concerns a method and a high-performance computation system for managing, especially for releasing, resources of said high-performance computation system.

### BACKGROUND OF THE INVENTION

In a High-Performance Computer (HPC), the resource manager, also called "Resource and Job Management System" or "RJMS", handles the allocation of resources, gathered as nodes, for active and pending jobs. When a resource or node, for example a server, a Central Processing Unit (CPU), a virtual machine, etc., is allocated by the RJMS for a given job, this resource or node is no longer available for any other job until the given job terminates.

In such systems, issues arise when jobs are not implemented correctly, especially for batch-computing. Indeed, those jobs can be running still, while not processing any computation nor producing any results. This kind of jobs is herein entitled "inactive job". This issue also happens for interactive jobs, where a user is no longer using his session although the session is not ended. In this case, the HPC resources remain allocated to the job and the RJMS prevents these resources from being allocated to another job.

Those issues lead to resources congestion, which is an overall slowdown of the HPC workload process caused by the deficiency of available resources and leading to severe Quality of Service (QoS) decrease. In some cases, this resources congestion can last for several weeks until the incriminated jobs are terminated, and the resources available again. The resources congestion is all the more penalizing as, in most cases, when a single resource of a node is allocated to a job, the whole node is considered allocated, thus preventing other jobs to use remaining free resources of this node.

A known solution consists in applying a walltime to a job. A walltime is a maximum duration at the end of which a job must terminate. If the job is still running when reaching the walltime, the job is automatically terminated by the RJMS. The walltime can be defined by the user requesting the job execution at the moment of the request definition. The walltime can also be set by the HPC administrator to a default value so that the job is ensured to terminate whether or not the user has defined said walltime.

The main drawback of using such walltime is that resources remain allocated until reaching the walltime, even if the job active duration is much shorter than the walltime. This drawback is even more penalizing when no walltime is defined by the user and the default walltime is used, as the default walltime can be much longer than the expected job duration: for example, a two days walltime is highly penalizing in terms of resources congestion for a job that only needs 10 minutes to complete. Another drawback occurs when the walltime is reached while the job is still processing: the resources will be released but the job will also be terminated by the RJMS, leading to extensive and expensive data losses, depending on the application.

Finally, as it is not mandatory when using a HPC system, the default walltime is not always defined by the HPC administrator. In this case, the inactive job may retain the resources indefinitely if the job is never terminated.

Consequently, it appears that setting a proper walltime if done, is intricate and works poorly for inactive jobs.

Therefore, means are needed for preventing HPC resources congestion caused by inactive jobs.

### SUMMARY OF THE INVENTION

An object of the invention is to provide a method and a system to detect an inactive job retaining resources and to terminate this inactive job.

To this end, according to a first aspect of the invention, it is provided a method for releasing resources in a high-performance computer, the high-performance computer comprising at least one node, each node comprising at least one resource and being associated with at least one metric, each metric taking values within a range of values divided into a plurality of sub-ranges of values, at least one resource being allocated to a job, the method comprising:
- For each node comprising at least one resource allocated to the job:
   ∘ For each metric associated with the node:
      ▪ Obtaining a set of samples for said metric;
      ▪ Counting, for each sub-range of values of the plurality of sub-ranges of values associated with said metric, the number of samples of the set of samples whose values are comprised within said sub-range of values, in order to obtain a plurality of counted numbers for said metric, each number of the plurality of counted numbers being related to one of the sub-ranges of values of the plurality of sub-ranges of values;
- Determining, using at least one machine learning model, from each obtained plurality of counted numbers, whether the job is active or inactive;
- If the job is determined as inactive, emitting a termination command to terminate the job and release each resource allocated to the job.

By "machine learning model" is meant a model defined with any machine learning approach able to predict, classify and/or extrapolate unseen data. Unseen data are data that were not used to train the machine learning model. The machine learning model can be designed for regression and/or classification purpose. The machine learning model can either be based on supervised, non-supervised or reinforcement learning. By way of examples, the machine learning model can be a decision tree, a random forest, a neural network, a logistic regression, a Support Vector Machine (SVM), etc.

By "inactive job" is meant a job to which resources are allocated and that is still running while not processing any computation nor producing any results. An inactive job therefore retains the allocated resources uselessly and the node comprising the resources behaves as if it were idle, alike a node to which no job is assigned. This node with no job assigned still has a minimum level of activity due to background processes and/or electrical devices, such as the Basic Input Output System (BIOS), the Operating System (OS), default running services, fans, memory devices, Central Processing Unit (CPU), Graphics Processing Unit (GPU), etc. This minimum level of activity of a node is called "idle activity".

By "metrics" is meant any kind and/or number of relevant measurable quantities to evaluate the activity of a resource. The metrics can be different for each type of resource, for example: CPU usage, CPU power consumption, number of CPU active cores, CPU frequency, volatile and/or non-volatile memory usage and/or consumption, overall power consumption, CPU c-states, GPU power consumption, number of GPU computation units used, GPU frequency, a number of exchanged network packets, etc. A metric is said to be active, respectively inactive, when the resource to which the metric is linked is active, respectively inactive. The metrics are of various natures and are either continuous or discrete. The metrics are preferably time varying in order to be of different value between an idle activity phase or during a non-idle activity phase.

By "allocation", otherwise called "allotment", is meant the assignment mechanism of one or more resources to the execution of a job. As resources mostly are gathered as nodes, the allocation consists in assigning one or more nodes for executing said job, the job then using the resources of these nodes to process. The allocation is managed by a scheduler. The scheduler is also able to release the resources or the nodes that were, until then, allocated to the job. The release is the deallocation mechanism of said resources or nodes. The released resources or nodes are then free to be allocated to another job.

By "termination" is meant the action implemented by the scheduler by which a job is set to an end, either by force or because the job is finished.

Thanks to the invention, it is now possible to automatically detect an inactive job to which resources are allocated, and to release those resources in order to make them free again for another allocation. Therefore, the invention allows resources congestion prevention.

The approach is simple to implement in any HPC as it only needs the implementation of the machine learning model to operate.

The counting of the samples, for the purpose of feeding the machine learning model, allows for smoothening and regularising the samples into the sub-ranges of values. The sensitivity of the machine learning model to peaks and transients that may be collected is thus reduced. In other words, the learning and estimation of the machine learning model are based on the background activity of the considered resources and not based on their transient periodic or erratic activities. This also increases the robustness of the machine learning model to metrics that have a non-gaussian statistical mean.

The machine learning model also allows for instant determination of whether the job is inactive, whereas the implementation of other models would be tedious and time consuming. Furthermore, the use of the machine learning model enables to determine if the job is inactive based on metrics of various natures, allowing to benefit from the individual and cross effects of the metrics. Mixing different natures of metrics with another tool would be intricate to implement and would have a poor accuracy, a poor robustness, and heavy computation times.

Advantageously, the method according to the first aspect of the invention can be periodically executed. This way, resources allocated to inactive jobs are ensured to be released as soon as possible. Preferably, the period between two executions of the method is shorter than the default walltime.

Furthermore, the risk of releasing resources while the job is still active is much lower than when using a walltime since the algorithm will not terminate a job while the resources are in use.

Also, thanks to this invention, there is no need for a user or an administrator to manually set a walltime. However, the invention can be combined with a walltime mechanism in order to release resources as soon as possible and to prevent infinite time resource usage by applying long walltime (e.g., several days).

Apart from the characteristics mentioned above in the previous paragraph, the method according to a first aspect of the invention may have one or several complementary characteristics among the following characteristics considered individually or in any technically possible combinations.

According to an embodiment, the method is periodically implemented.

Thanks to this embodiment, the inactive job detection is regularly implemented, thus reducing the duration of resources retainment.

According to an embodiment, each machine learning model is a one class classification machine learning algorithm.

According to an embodiment, the set of samples corresponds to a predefined duration of activity.

According to an embodiment, the determination whether the job is active or inactive uses a single machine learning model able to directly determine if the job is active or inactive from each obtained plurality of counted numbers.

According to an embodiment, the determination whether the job is active or inactive uses one machine learning model per metric, each machine learning model being able to determine if the associated metric is active or inactive from the corresponding plurality of counted numbers, the determination whether the job is active or inactive comprises:
- For each node comprising at least one resource allocated to the job:
   ∘ For each metric associated with the node, determining whether said metric is active or inactive by feeding the corresponding machine learning model with the associated plurality of counted numbers;
   ∘ Determining whether the node is active or inactive based on the number of metrics determined as inactive;
- Determining whether the job is active or inactive based on the number of nodes determined as inactive.

According to an embodiment, a node is determined as inactive when the number of metrics determined as inactive exceeds a metric threshold, and wherein a job is determined as inactive when the number of nodes determined as inactive exceeds a node threshold.

According to a second aspect of the invention, it is provided, a method for training a machine learning model, the trained machine learning model being configured to determine whether a job running on a high-performance computer is active or inactive, the high-performance computer comprising at least one node, each node comprising at least one resource and being associated with at least one metric, each metric taking values within a range of values divided into a plurality of sub-ranges of values, at least one resource being allocated to the job, the method comprising:
- For each node comprising at least one resource allocated to the job:
   ∘ For each metric associated with the node:
      ▪ Obtaining a plurality of sets of training samples for said metric, the set of training samples being collected during a period of idle activity;
      ▪ For each set of training samples, counting, for each sub-range of values of the plurality of sub-ranges of values associated with said metric, the number of samples of the set of samples whose values are comprised within said sub-range of values, in order to obtain a plurality of counted numbers for said metric, each number of the plurality of counted numbers being related to one of the sub-ranges of values of the plurality of sub-ranges of values;
- Training the machine learning model with each obtained plurality of counted numbers.

According to a third aspect of the invention, it is provided, a method for training a machine learning model, the trained machine learning model being configured to determine whether a metric is active or inactive, the metric being associated with one node of a high-performance computer and taking values within a range of values divided into a plurality of sub-ranges of values, the method comprising:
- Obtaining a plurality of sets of training samples for said metric, the set of training samples being collected during a period of idle activity;
- For each set of training samples, counting, for each sub-range of values of the plurality of sub-ranges of values associated with said metric, the number of samples of the set of training samples whose values are comprised within said sub-range of values of the plurality of sub-ranges of values, in order to obtain a plurality of counted numbers for said metric, each counted number of the plurality of counted numbers being related to one of the sub-ranges of values of the plurality of sub-ranges of values;
- Training the machine learning model with each obtained plurality of counted numbers.

By "learning database" is meant a database of samples of metrics, preferably a database comprising at least one sample for each metric of each node of the HPC. The learning database is used to train the machine learning model, meaning that the machine learning model is fed with the learning database to recursively optimize its prediction or classification mechanism, i.e., tuning the parameters of the machine learning model, in order to produce reliable estimation of whether a job or a metric is inactive or active.

Thanks to the method according to the second or the third aspect of the invention, it is now possible to automatically train the machine learning model(s) to further detect an inactive job to which resources are allocated, according to the second aspect, or to detect inactive metrics, according the third aspect. The trained machine learning model(s) can then be used for releasing those resources in order to make them free again for another allocation, from reference values gathered from several metrics of each node of the High-Performance Computer (HPC).

The method according to these second or third aspect is also highly reliable as each node possesses its own specific metrics, thus providing a high level of accuracy when training the machine learning model(s) and also when determining whether the job or the metrics of the nodes are inactive.

According to an embodiment, the plurality of sets of training samples is obtained using a sliding window over the period of idle activity according to a sliding step. Thanks to this embodiment, the size of the learning database and the diversity of the samples it contains are increased, thus improving the reliability of the machine learning model(s). The diversity is even more increased when the activity of the resources over the inactive period is not steady, for example due to a background process that hardly uses a resource for one part of the inactive period and then uses a little amount of said resource over the other part of the inactive period.

According to an embodiment, each set of samples and each set of training samples are obtained from a corresponding set of raw samples, by applying at least one mathematical operation to the corresponding set of raw samples.

Thanks to this embodiment, it is possible to use metrics that are less sensitive to peaks than metrics of raw samples, also making the machine learning model(s) less sensitive to peaks and transients.

According to an embodiment, the mathematical operation is a gradient.

Thanks to this embodiment, the detection of an inactive job is improved because the gradient is adapted to identify common behaviours in signals of different trends.

According to an embodiment, the plurality of counted numbers is normalised.

Thanks to this embodiment, the machine learning module can be used to determine whether a job is inactive based on metrics with different number of samples per metric. Advantageously, the machine learning model(s) can also be used to determine whether a job is inactive based on metrics with different number of samples per metric between the learning phase and the inactive resource detection phase.

According to a fourth aspect, it is provided a method for releasing resources in a high-performance computer according to the method according to the first aspect of the invention, wherein the machine learning model is trained according to the method according to the second or third aspect of the invention.

Thanks to this fourth aspect, the method for releasing the resources according to the first aspect benefits from the advantages of the training method according to the second or the third aspect of the invention.

According to a fifth aspect of the invention, a high-performance computer configured to implement a method according to the invention, comprising:
- At least one node comprising at least one resource and being associated with at least one metric;
- A monitoring module, configured to collect a set of samples for each metric, each metric taking values within a range of values divided into a plurality of sub-ranges of values;
- A scheduler configured to allocate at least one resource to each job, to release each resource allocated to each job and/or to terminate each job;
- A machine learning module configured to:
   ∘ For each node comprising at least one resource allocated to a given job and for each metric associated with said node:
      ▪ Obtain each corresponding set of samples collected by the monitoring module;
      ▪ Count, for each sub-range of values of the plurality of sub-ranges of values associated with the metric, a number of samples of the set of samples whose values are comprised within said sub-range of values, in order to obtain a plurality of counted numbers for said metric, each counted number of the plurality of counted numbers being related to one of the sub-ranges of values of the plurality of sub-ranges of values;
   ∘ Determine using at least one machine learning model, based on the plurality of obtained counted numbers whether the job is active or inactive;
   ∘ If the job is determined as inactive, emit a termination command to terminate the job.

Thanks to this, the HPC only requires the implementation of a simple single module to process the method according to the first and/or second and/or third aspect of the invention.

According to a sixth aspect of the invention, it is provided a computer program product comprising instructions which, when the program is executed by a computer, causes the computer to carry out the method according to the first, the second, the third or the fourth aspect of the invention.

According to a seventh aspect of the invention, it is provided a computer-readable medium comprising instructions which, when executed by a computer, cause the computer to carry out the method according to first, the second, the third or the fourth aspect of the invention.

The invention and its various applications will be better understood by reading the following description and examining the accompanying figures.

### BRIEF DESCRIPTION OF THE FIGURES

The figures are presented for information purposes only and in no way limit the invention.
- Figure 1 is a schematic of a high-performance computer according to the invention.
- Figure 2 is a flow chart of a machine learning model training method according to the invention.
- Figure 3 is a flow chart of a resource release method according to the invention.
- Figure 4 is an implementation example of the machine learning model training method according to figure 2.
- Figure 5 is an implementation example of the resource release method according to figure 3.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

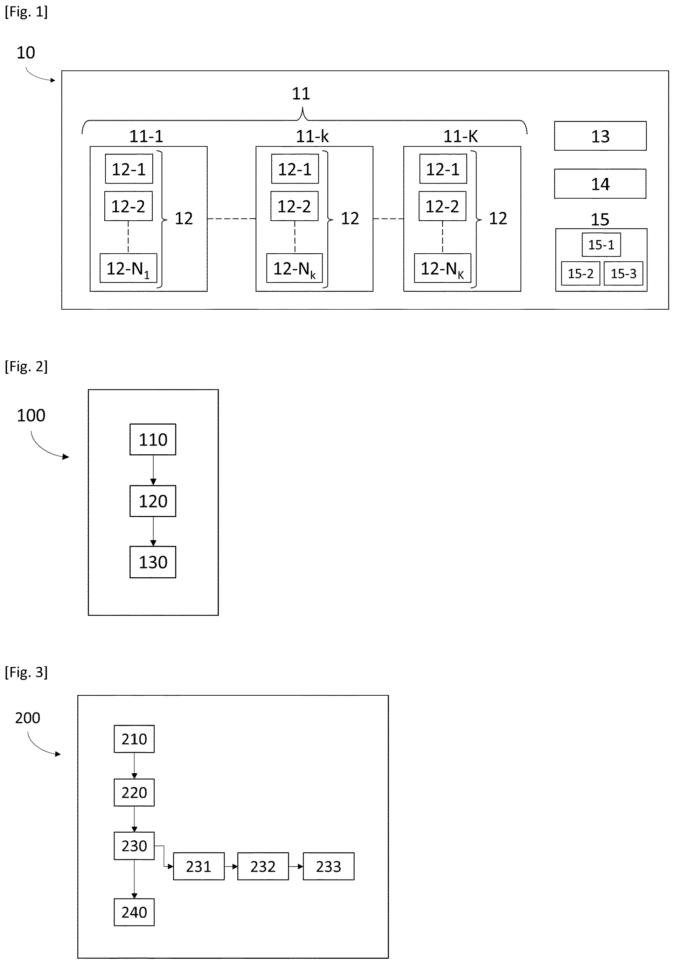

The invention relates to a method for releasing resources of a High-Performance Computer (HPC), which uses at least one machine learning model. The invention also relates to a method for training the machine learning model and to a HPC configured to implement both or one of said methods. Referring to figure 1, the HPC 10 comprises:
- A plurality of nodes 11;
- A monitoring module 13;
- A scheduler 14;
- A machine learning module 15.

In the HPC 10, resources 12 are grouped as nodes 11. Each node 11 then comprises at least one resource 12 that can be allocated to a job. By "job" is meant any processing/computation task requested automatically or manually, for example by a user or as a task in a computation routine.

Resources are any kind of node elements that can be used for the execution of the job. The allocated resources 12 are used by the job during its execution. Resources can be any type of hardware or software resources, such as Central Processing Unit (CPU), volatile or non-volatile memories, Graphics Processing Unit (GPU), virtual environments hosted on Virtual Machines (VM), specific applications, storing spaces, servers, etc. In the embodiment of figure 1, the HPC 10 comprises *K* nodes 11, each node 11 comprising *Nₖ* resources 12, where *k* = 1, ..., *K.* Some resources 12 can be shared between nodes 11.

Each node 11 is associated with at least one metric used to quantify the activity of its resources 12. Examples of metrics are CPU usage, CPU power consumption, number of CPU active cores, CPU frequency, volatile and/or non-volatile memory usage and/or consumption, overall power consumption, CPU c-states, GPU power consumption, number of GPU computation units used, GPU frequency, a number of exchanged network packets, etc.

The monitoring module 13 is configured to collect samples of the metrics of each node 11 of the HPC 10. The collection of samples is achieved thanks to probes - not represented - implemented in the HPC 10. The probes can be any type of probe that can be used for measuring one or several metrics. The measure can be obtained directly from the probes or indirectly, that is determined from measurements made by the probes. The probes can be either hardware or software probes, which means that the probe can either be a device or a set of instructions stored in a memory of a sensing module that, when executed, allows a numerical measurement of a metric without any device needed.

The metrics are of various nature, depending on the types of the resources 12 of each node 11. However, a same metric can be used for different types of resources, and different metrics can be used for several resources of a same type. The metrics can be continuous or discrete quantities. The number of metrics can then differ between resources of different types, and even between resources of a same type. The samples of the metrics are collected at a predefined sampling frequency. The sampling frequency can be the same for each metric of each node 11 or can be different. The sampling frequency is predefined, for example by the HPC administrator, based on hardware and software specifications of the resources 12 and nodes 11 of the HPC 10. Preferably, the sampling frequency is short enough to have an almost continuous collection of the samples. The sampling frequency is also long enough for not collecting too many samples at a time, avoiding huge amounts of samples per second. In the current embodiment, the sampling frequency is comprised between 0.1 Hz and 100 Hz, preferably between 0.5 Hz and 10 Hz, for example 1 Hz.

The scheduler 14 is configured to allocate at least one resource 12 of the HPC 10 to a job. The scheduler 14 allocates the resources when it receives a job computation request. A common practice is to allocate a full node 11 to the job when at least one of its resources 12 is allocated to said job. The scheduler 14 can also be configured to release resources previously allocated to a job. The scheduler 14 is also configured to terminate jobs. To these ends, the scheduler 14 comprises in its memory, instructions that, when executed by its processor, causes the scheduler 14 to implement the allocation, the release and/or the termination actions. The scheduler 14 is also able to handle batch-computing jobs.

The machine learning module 15 comprises a memory 15-1 and a processor 15-2. It can also comprise a retrieving module 15-3. The memory 15-1 can comprise a volatile memory and/or a non-volatile memory. The machine learning module 15 comprises, in its memory 15-1, instructions that, when implemented by its processor 15-2, cause the machine learning module 15 to implement the method for training the machine learning model and/or the method for releasing HPC resources.

The method 100 for training the machine learning model comprises three successive steps, as illustrated by the flow chart in figure 2, that are numbered from 110 to 130.

The method 100 is used to train the machine learning model so that the trained machine learning model is able to estimate whether a job is inactive or to train several machine learning models, one per node or one per metric, to estimate whether the nodes or metrics associated to said nodes are inactive, respectively.

The first step 110 of the method 100 for training the machine learning model is a step of obtaining a set of samples of metrics, comprising at least one sample of metrics. Said samples are hereafter called learning samples and are collected by the monitoring module 13.

The set of learning samples is obtained by the retrieving device 15-3 for each metric associated with each node 11. Alternatively, the learning samples are collected for all or part of the metrics of all or a part of said nodes 11.

The learning samples are collected during a period of idle activity for each node 11. Put another way, for a given node 11, the learning samples are the samples collected by the monitoring module 13 when said node 11 operates at its minimum level of activity with no job assigned to said node 11. The period of minimum level of activity is provided by the scheduler 14, as the scheduler 14 knows when no job is processing on a given node 11 of the HPC 10.

As a way of example, the monitoring module 13 continuously collects samples of metrics and stores them on a database. This database can be a memory of the monitoring module 13 or a separated memory. This database can be read by the retrieving device 15-3. The database can then store a tremendous number of samples for each metric, depending on the acquisition period and on the sampling frequency. The scheduler 14 can be used to tag each sample with a label, said label then indicating whether the sample has been acquired during an idle activity period or during a job execution period. Therefore, the retrieving device 15-3 can access the database to retrieve and obtain samples of metrics only corresponding to the idle activity period of each node 11.

Alternatively, there can be a connection device or a network (not represented) for connecting the monitoring module 13 and the machine learning module 15. There also can be a triggering mechanism for the scheduler 14 to inform the machine learning module 15 to know when to obtain the collected samples from the monitoring module 13, i.e., when the scheduler 14 knows when the node 11 is in an idle activity period.

The idle activity period can be of any duration, although the longer the better as the training will be of better reliability and the estimation of better robustness. The duration is between 1 hour and 1 year, preferably between 1 week and 10 weeks, for example 1 month.

When the retrieving device 15-3 has obtained the learning samples, it processes to the second step 120. The learning samples can be temporarily stored in the memory 15-1 and deleted after the training method 100 is achieved, such that only the trained machine learning model is kept in memory 15-1.

For a given node 11, each associated metric can take values within a range of values divided into a plurality of sub-ranges of values.

The second step 120 is then realized for each metric and consists in counting, for each sub-range of values associated with the metric, the number of learning samples having a value comprised in the sub-range of values. The sub-ranges of values are preferably adapted to the metric they are associated to. Some sub-ranges of value can range from the same values for several resources 12 and/or nodes.

Preferably, the plurality of sub-ranges of values has a predefined number of equally spaced sub-ranges of values. Put another way, a number of sub-ranges of values is predefined, for example by the administrator of the HPC, for each metric and the sub-ranges of values of the metric are defined in order to range between the maximum value and the minimum value of the metric and to be of equal size. The sub-ranges of values of each plurality of sub-ranges of values are preferably not overlapping, but it is possible that they overlap.

The number of sub-ranges of values per metric is predefined so that there are enough sub-ranges of values per metric for minimizing the training bias of the machine learning model. The number of sub-ranges of values is also predefined so that there are not too many sub-ranges of values per metric, avoiding too much noise in the training data and ensuring a robust estimation of the machine learning model. Predefining the number of sub-ranges of values is then a trade-off between noise and accuracy. The number of sub-ranges of values per metric is between 2 and 100, preferably between 5 and 25, for example 10, 15 or 20.

Also, the number of sub-ranges of values can depend on the number of samples for the idle activity period. With few samples, a smaller number of sub-ranges of values can be defined, whereas with lots of samples, a greater number of sub-ranges of values can be defined. This allows for a better equilibrium between noise and accuracy.

The number of sub-ranges of values per range of values can be the same or can be different for all or part of the ranges of values.

The maximum and minimum metric values are known from the metric nature and the associated resource type. The minimum value and the maximum value are the minimal and maximal metric values, respectively, that said resource is able to reach. For example, the minimal number of active CPU cores is 0 and the maximal number is the total number of cores comprised in the CPU. As another example, the minimal value of used volatile memory is 0 % or 0 Mb, and the maximal value is 100 % or the total number megabytes of the volatile memory.

The counting of number of learning samples per sub-range of values then resides in counting for each node 11, how many learning samples for each metric associated to said node 11, over the idle activity period, have a value comprised in one of the sub-ranges of values of the plurality of sub-ranges of values of said metric. The counting then provides a plurality of counted numbers containing said numbers of learning samples per sub-range of values.

Alternatively, the counting is performed for all or part of the metrics of all or part of the nodes 11.

The machine learning module 15 then proceeds to the third step 130, that is a step of training the machine learning model using the number of learning samples per sub-range of values.

To this purpose, the learning samples are gathered as a learning database, at least temporarily stored in the memory 15-1 until completion of the training step 130. Preferably, the learning database is indefinitely stored for further use and upgrade of the machine learning model, as further detailed.

The learning database therefore contains the number of learning samples per sub-range of values for each sub-range of values of the plurality of sub-ranges of values for each metric of each node 11.

The training mechanism, on which the training step 130 relies, is dependent on the nature of the machine learning model that is used.

For example, the machine learning module is a neural network, a SVM or a random forest. Preferably, the machine learning algorithm is a one-class classification tool such as a One Class-Support Vector Machine (OC-SVM) or an isolation forest. The training of both algorithms is easy to implement as it only needs data from the idle activity period and not also from another period to be able to classify. The isolation forest is easy to implement, faster to learn but is noise sensitive, whereas the OC-SVM is slower to learn but is less noise sensitive, as it is able to detect outliers, and is also easy to implement. Moreover, the OC-SVM is a parametric model that is easy to regularize. Considering the collected metrics, the regularisation strains have to be weak in order to account for the non-gaussian distribution of the metrics. Advantageously, the OC-SVM is inherently designed for applying a threshold to its classification in order to determine whether the job is inactive.

Depending on the application, the machine learning model is differently implemented. In the current embodiment, only one machine learning model is implemented, and accounts for all metrics of all resources of all nodes 11 of the HPC 10 at once; this way the machine learning model allows accounting for behaviour correlations and/or cross-effects of metrics and resources 12. The machine learning model then directly indicates whether the job is active or inactive. Alternatively, the machine learning model indicates which metrics or nodes are active or inactive.

In other embodiments, the machine learning model is implemented on a per node basis. This means that several machine learning models are implemented, each one accounting for all metrics of one node of the HPC; this way the machine learning model accounts for behaviour correlations and/or cross-effects of metrics and resources. Each one of the several machine learning models then estimates whether a node is active or inactive.

In other embodiments, the machine learning model is implemented on a per metric basis. This means that several machine learning models are implemented, one for each metric of each node of the HPC; this way, each metric is considered independently from the others. Each one of the several machine learning models then estimates whether a metric is active or inactive.

In some embodiments, compatible with the current embodiment, the idle activity period of a node is analysed using a sliding window over said period. The counting step 120 is then carried out for each slide of the sliding window on the time laps limited by said window, therefore producing a plurality of counts comprising one count for each slide. By "one count" is herein meant a counting process according to the second step 120.

The length of the sliding window is longer than the sampling frequency of the monitoring module 13. The length of the sliding window is preferably shorter than the idle activity period. Preferably, the length of the sliding window is between twice and hundred times shorter than the idle activity period. For example, the sliding window lasts one hour while the idle activity period lasts a month. The sliding window is of the same length for each metric. Alternatively, this length can be different for each metric. The number of sub-ranges of values for a given metric is constant for each slide of the sliding window over the idle activity period.

The slide step of the sliding window is proportional to the sampling frequency of the monitoring module 13. The proportionality rate between the slide step and the sampling frequency can be an integer. For example, the proportionality rate is equal to 1 and the slide step is equal to the sampling frequency.

Afterwards, the plurality of counts is fed to the machine learning model for training, at the third step 130. The machine learning model therefore learns over several counts, one for each slide, over the idle activity period. This allows for a larger learning database, which comprises the plurality of counts, thus enhancing the learning outcome.

The method 200 for releasing HPC resources comprises four successive steps, as illustrated by the flow chart in figure 3, that are numbered from 210 to 240.

The method 200 uses the trained machine learning model to determine whether a job is inactive. At least one resource 12 of the HPC 10 is allocated to said job. The inactive job estimation is based on at least one metric of at least one of the nodes 11 comprising the at least one resource 12 allocated to said job.

The first step 210 is a step of obtaining a set of samples. The samples are collected by the monitoring module 13 for each metric of each node 11 comprising at least one resource 12 allocated to the job by the scheduler 14.

Alternatively, the samples are obtained for all or part of said metrics of all or part of the nodes 11 comprising the at least one allocated resource 12.

Preferably, the samples are collected by the monitoring module 13 at the sampling frequency. The samples can be temporarily stored on the memory 15-1.

The samples can be collected over a predefined duration. The predefined duration is, for example, predefined by the administrator of the HPC 10. The predefined duration is long enough for collecting not too many samples, in order to derive a reliable count in the second step 220 hereafter. The predefined duration is also short enough for detecting that the job is inactive on sufficiently short notice, therefore not retaining unused resources 12. For example, the predefined duration is between 1 minute and 1 day. Preferably, the predefined duration is between 10 minutes and 3 hours. This way said duration accounts for the most common execution times of jobs on HPCs. Indeed, most jobs execution on such computer lasts between a couple of minutes and a few hours. For example, the predefined duration is 1 hour. The predetermined duration is preferably equal to the length of the sliding window.

The machine learning module then proceeds to the second step 220, which is a step of counting a number of samples per sub-ranges of values. These sub-ranges of values are the same as previously defined for the counting in the second step 120 of the method 100 for training the machine learning model.

The counting of the samples is carried out in the same manner as for the counting in the second step 120 of the previous method 100. Therefore, for each metric associated with the samples, the number of the samples is counted for each sub-range of values of the plurality of sub-ranges of values for said metric. The counting then provides a plurality of counted numbers containing said numbers of samples per sub-range of values. The number of the samples can be temporarily stored in the memory 15-1. Alternatively, the counting is performed for all or part of said metrics of all or part of the nodes 11 comprising the at least one allocated resource 12.

The machine learning module 15 further proceeds to the third step 230, which is a step of determining whether the job is inactive. This determination is carried out by feeding the machine learning model with the number of the samples per sub-range of values. The machine learning model is then fed with the number of the samples for each sub-range of values of the plurality of sub-ranges of values for each metric of each node 11 comprising the at least one resource 12 allocated to the job. When only one machine learning model is implemented, it provides as an output a piece of information that indicates whether the job is still active or inactive. The piece of information can be of any format, for example a character, a string, a number of any format, a message containing said character or string or number, or any combination thereof.

The fourth step 240 is a step of emitting a termination command to terminate the inactive job. The termination command is emitted by the machine learning module 15 to the scheduler 14. The command comprises any format of command that can be interpreted by the scheduler 14 so that the scheduler 14 understands that the inactive job must be terminated. Therefore, the command contains at least an indicator of the inactive job to be terminated, in order for the scheduler 14 to know which one of the still running job must be terminated.

At reception of the termination command, the scheduler 14 terminates the inactive job retaining the allocated resources 12 and/or the allocated nodes 11. The allocated resources 12 and/or nodes 11 are then released and can be allocated to another job.

In some embodiments, compatible with the previously mentioned embodiments, the job is implemented using batch-computing. For example, the job is divided into at least two sub-jobs. The scheduler 14 thus has allocated different resources to each sub-job, or two or more different nodes. The machine learning model is then able to distinguish which sub-jobs are inactive so that only the inactive sub-jobs are terminated. Therefore, the termination command also comprises an identifier of the node 11 or resources 12 allocated to the inactive sub-job, in order not to terminate the whole job. This allows data loss prevention as only the inactive sub-job is terminated.

In some embodiments compatible with the previous embodiments, only a part of the samples collected by the monitoring module 13 during the idle activity period are used as learning samples. The part of the samples can be chosen so as to respect a predetermined frequency. The predetermined frequency is, for example, predetermined by the administrator of the HPC. The predetermined frequency is preferably proportional to the sampling frequency. For example, only one sample out of two or three or more are used as learning samples.

In some embodiments compatible with the previous embodiments, the number of samples collected over the predefined duration differs from the number of learning samples collected over each sliding window. This is, for example, the case when the samples are collected at a frequency different from the sampling frequency or the predetermined frequency, and/or when the predefined duration is not the same as the sliding window. In these cases, the counts determined at the second step 120 of the training method 100 and determined at the second step 220 of the inactive job determination method 200 are, for each sub-range of values of each metric, normalised by the total number of learning samples or samples, respectively, of said metric. Consequently, the counts comprise real numbers of relative values, comprised between 0 and 1, instead of absolute values comprises between 0 and the total number of samples for each metric. The counts can also be determined as percentages. This ensures that the learning and prediction/classification steps are implemented using data of same variance, even though they were not collected over the same duration or/nor with the same sampling frequency.

In some embodiments compatible with the previous embodiments, the samples used by the machine learning model for learning and estimation are derived from raw samples collected by the monitoring module 14. In such cases, the step 110 of obtaining the set of learning samples and the step 210 of obtaining the set of samples are divided into two sub-steps numbered 111 and 112, and 211 and 212, respectively. The value of each sample is then derived from the values of the raw samples.

By "derived" is meant obtained using any king of mathematical formulation. The derived samples can be of any kind and any nature, such as other metrics derived from the metric of said raw samples or other features. Preferably, the samples of the set of samples are computed from the gradient of the raw samples of the set of raw samples.

The sub-step 111 is a step of obtaining the raw samples by the retrieving device 15-3, preferably by collecting a set of raw samples for each metric of each node 11. Alternatively, the raw samples are collected for all or part of the metrics of all or a part of said nodes 11.

The sub-step 112 is then a step of deriving the raw samples into the samples, in this case into the learning samples. Each set of samples then is associated to one of the sets of raw samples, and the samples of each set of samples are then derived from the raw samples of the corresponding set of raw samples. Several set of samples can be derived from a same set of raw samples for each metric.

The sub-step 211 is a step of obtaining the raw samples by the retrieving device 15-3, preferably by collecting a set of raw samples for at least one metric of at least one of the nodes 11 comprising the resources 12 allocated to the job.

The sub-step 212 is then a step of deriving the raw samples into the samples used for determining whether the job is active or inactive. Each set of samples is then associated to one of the sets of raw samples, and the samples of each set of samples are then derived from the raw samples of the corresponding set of raw samples. Several set of samples can be derived from a same set of raw samples for each metric. The samples of the set of samples can be derived over two or more consecutive raw samples of the associated set of raw samples.

The sub-steps 111 and 112 can be implemented for each or part of the metrics of each or part of the nodes 11 of the HPC 10. The sub-steps 211 and 212 can be implemented for each or part of the metrics of each or part of the nodes 11 of the HPC 10 comprising the allocated resources.

Alternatively, the machine learning model can be trained using both raw samples and derived samples from the raw samples, depending on the application and/or on the considered metric, for one or more metric of each node 11.

Advantageously, the method 100 for training the machine learning model can be implemented again at a later time in order to account for modifications of resources 12 and/or nodes 11 of the HPC 10. This way, the machine learning model is kept up to date with the current HPC specifications and allows a reliable inactive job determination. It is also possible that the method 100 for training the machine learning model is periodically implemented to achieve this aim. The periodical implementation may be individually carried out for each node 11. To these ends, the learning database can be permanently stored on the memory 15-1 and be updated with learning samples collected during a more recent idle activity period.

Advantageously, the method 200 for determining whether a job is inactive can be periodically implemented in order to allow a continuous detection of the inactive jobs. In this case, the inactive job determination method 200 is implemented at an implementation period. The implementation period can be predefined, for example by the administrator of the HPC, and is comprised between the time between two collected samples by the monitoring module and one or more days. Preferably, the implementation period is shorter than 1 day, for example it is 1 hour. In this case, after the implementation period, the inactive job determination method 200 is carried out again and determines whether the job has been inactive over the last predefined duration. For example, each hour, the method 200 is implemented to detect the inactivity of the job over the last hour.

In the case where one machine learning model per metric is implemented, the third step 230 of the inactive job determination method 200 is divided into three successive sub-steps, numbered from 231 to 233, as illustrated on figure 3. In this case, the several machine learning models are implemented.

Alternatively, when the machine learning models are per node implemented, the third step 230 of the inactive job determination directly processes to the third sub-step 233 as the several machine learning models directly indicate which nodes are active and which are inactive.

This first sub-step 231 is implemented on a metric per metric basis, therefore requiring iterating said sub-step for each metric of each node 11 comprising the allocated resources.

The first sub-step 231 is a step of determining, with the corresponding machine learning model, whether the metric is inactive. This sub-step 231 is carried out by feeding the machine learning module 15 with the plurality of counted numbers obtained for the metric.

The second sub-step 232 is a step of determining, for each node 11 comprising at least one resource 12 allocated to the job, whether the node 11 is inactive. A node is inactive when its overall number of inactive metrics, among its metrics, exceeds a metric threshold. The metric threshold then represents a level of inactivity of the resources 12 of a node 11 above which the node 11 is considered as inactive. The metric threshold can be any kind of number, such as a number of resources 12 or a percentage of the total number of resources 12 of each node 11. The metric threshold is node dependent. Preferably, the metric threshold is a percentage of inactive metrics of said node 11 and is between 50 % and 100 %, for example 90 % or 95 %. The metric threshold is, for example, predefined by the operator of the HPC. At this sub-step 232 is then determined a number of inactive metrics for each node 11. The number of inactive metrics is the number of metrics that are determined as inactive according to the preceding sub-step 231. When the number of inactive metrics of the node 11 exceeds the metric threshold, the node 11 is defined as inactive.

The third sub-step 233 is then a step of determining whether a job is inactive and should be terminated. A job is inactive when the number of nodes 11 comprising resources 12 allocated to said job exceeds a node threshold. The node threshold then represents a rate of inactivity of the nodes 11 above which the job is considered as inactive. The node threshold can be a number of nodes 11 or a percentage of the total number of nodes 11. Preferably, the node threshold is a percentage of inactive nodes 11 of the total number of nodes 11, and is between 50 % and 100 %, for example 90 % or 95 %. The node threshold is, for example, predefined by the operator of the HPC 10. At this sub-step 233 is then determined a number of inactive nodes 11. The number of inactive nodes 11 is the number of nodes 11 determined as inactive according to the preceding sub-step 232. When the number of inactive nodes exceeds the node threshold, the job is determined as inactive.

In the case the job is determined as inactive, the step 240 of emitting the termination command is carried out as previously described.

It is alternatively possible that the job is defined as inactive based on the number of inactive metrics, when said number of inactive metrics exceeds the metric threshold.

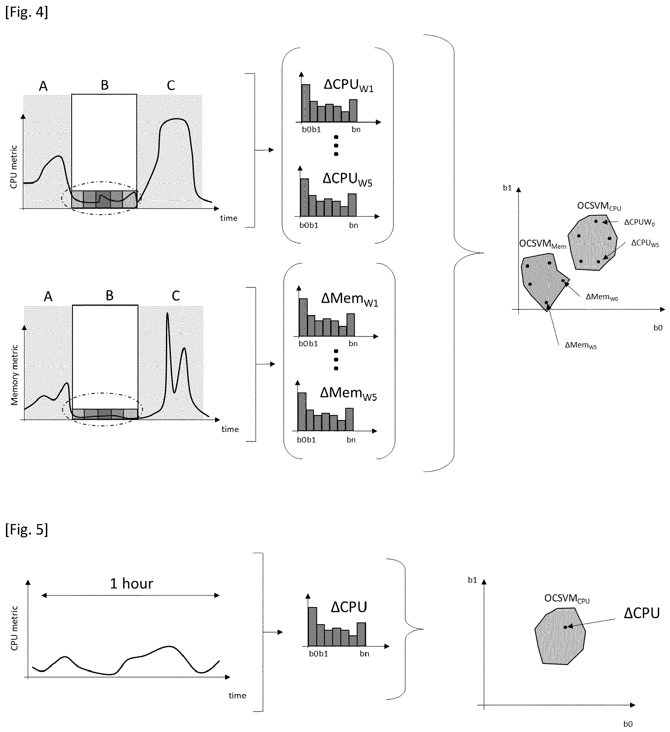

As way of illustration, an example is proposed in figures 4 and 5. It is considered a node 11 of a HPC 10 that comprises a CPU and a volatile memory. The total core activity, measured in MHz, is the monitored CPU metric. The amount of used memory, defined as a percentage of the total memory, is the monitored volatile memory metric.

Over the last month, the monitoring module 13 has been collecting samples of the two metrics and storing them in a shared database. The two graphics on the left side of figure 4 show the evolution of the two metrics over time. During this month, the node was not allocated to any job and had idle activity for the time period B. For the time periods A and C, the node 11 was allocated. The idle activity period B is analysed using a sliding window such that the whole period B is covered by applying 5 slides to said window.

For each metric, a number n of non-overlapping contiguous sub-ranges of values b is defined. The sub-ranges of values are identified by an index b1 to bn. For each slide of the sliding window is then counted the number of samples contained in the window for which the gradient of the associated metric falls within one of the sub-ranges of values. Each slide is identified by an index W1 to W5. The count results are illustrated in the centre part of figure 4. The count results of the CPU metric are indexed from ΔCPU_{W1} to ΔCPU_{W5}. The count results of the memory metric are indexed from ΔMem_{W1} to ΔMem_{W5}.

The counts of samples per sub-range of values for each slide are then gathered in the learning database to feed and train an OC-SVM algorithm. This algorithm projects each count per sub-range of values in a n-dimension hyperspace, where n is again the number of sub-ranges of values. An illustration of this projection is proposed on the right side of figure 4. Each dot is the projection of the counts per sub-range of values for one slide of the sliding window. The several dots then create a cloud of dots for each metric that can be delimited by the OC-SVM learning mechanism. The cloud of CPU metric dots is named OCSVM_{CPU} and the cloud of memory metric dots is named OCSVM_{Mem}. The OC-SVM algorithm is trained using a radial basis function kernel.

After training the OC-SVM algorithm, the samples are collected by the monitoring module over a predefined duration equal to 1 hour for the CPU that has been allocated to a job. The metric evolution of the last hour is illustrated on the left side of figure 5. In this example, only the CPU metric is analysed. The gradient of the CPU metric is determined and the count ΔCPU of the samples per sub-range of values is then carried out, as illustrated on the centre part of figure 5. The number of samples per sub-range of values is, afterwards, fed to the OC-SVM algorithm, which returns whether the CPU metric is inactive or not. In this example, the CPU metric is inactive. Following sub-steps 231 to 233, it can further be decided whether the job should be terminated or not, according to the fourth step 240.

## Claims

1. Method (200) for releasing resources (12) in a high-performance computer (10), the high-performance computer (10) comprising at least one node (11), each node (11) comprising at least one resource (12) and being associated with at least one metric, each metric taking values within a range of values divided into a plurality of sub-ranges of values, at least one resource (12) being allocated to a job, the method (200) comprising:
- For each node (11) comprising at least one resource (12) allocated to the job:
• For each metric associated with the node (11):
∘ Obtaining (210) a set of samples for said metric;
∘ Counting (220), for each sub-range of values of the plurality of sub-ranges of values associated with said metric, the number of samples of the set of samples whose values are comprised within said sub-range of values, in order to obtain a plurality of counted numbers for said metric, each number of the plurality of counted numbers being related to one of the sub-ranges of values of the plurality of sub-ranges of values;
- Determining (230), using at least one machine learning model, from each obtained plurality of counted numbers, whether the job is active or inactive;
- If the job is determined as inactive, emitting (240) a termination command to terminate the job and release each resource (12) allocated to the job.

2. Method (200) according to the preceding claim, wherein each machine learning model is a one class classification machine learning algorithm.

3. Method (200) according to any of the preceding claims, wherein the set of samples corresponds to a predefined duration of activity.

4. Method (200) according to any of the preceding claims, wherein the determination whether the job is active or inactive uses a single machine learning model able to directly determine if the job is active or inactive from each obtained plurality of counted numbers.

5. Method (200) according to any of the preceding claims, wherein the determination whether the job is active or inactive uses one machine learning model per metric, each machine learning model being able to determine if the associated metric is active or inactive from the corresponding plurality of counted numbers, the determination whether the job is active or inactive comprises:
- For each node (11) comprising at least one resource (12) allocated to the job:
• For each metric associated with the node (11), determining (231) whether said metric is active or inactive by feeding the corresponding machine learning model with the associated plurality of counted numbers;
• Determining (232) whether the node (11) is active or inactive based on the number of metrics determined as inactive;
- Determining (233) whether the job is active or inactive based on the number of nodes determined as inactive.

6. Method (200) according to the preceding claim, wherein a node (11) is determined as inactive when the number of metrics determined as inactive exceeds a metric threshold, and wherein a job is determined as inactive when the number of nodes determined as inactive exceeds a node threshold.

7. Method (100) for training a machine learning model, the trained machine learning model being configured to determine whether a job running on a high-performance computer (10) is active or inactive, the high-performance computer (10) comprising at least one node (11), each node (11) comprising at least one resource (12) and being associated with at least one metric, each metric taking values within a range of values divided into a plurality of sub-ranges of values, at least one resource (12) being allocated to the job, the method (100) comprising:
- For each node (11) comprising at least one resource (12) allocated to the job:
· For each metric associated with the node (11):
∘ Obtaining (110) a plurality of sets of training samples for said metric, the set of training samples being collected during a period of idle activity;
∘ For each set of training samples, counting (120), for each sub-range of values of the plurality of sub-ranges of values associated with said metric, the number of samples of the set of samples whose values are comprised within said sub-range of values, in order to obtain a plurality of counted numbers for said metric, each number of the plurality of counted numbers being related to one of the sub-ranges of values of the plurality of sub-ranges of values;
- Training (130) the machine learning model with each obtained plurality of counted numbers.

8. Method (100) for training a machine learning model, the trained machine learning model being configured to determine whether a metric is active or inactive, the metric being associated with one node (11) of a high-performance computer (10) and taking values within a range of values divided into a plurality of sub-ranges of values, the method (100) comprising:
- Obtaining (110) a plurality of sets of training samples for said metric, the set of training samples being collected during a period of idle activity;
- For each set of training samples, counting (120), for each sub-range of values of the plurality of sub-ranges of values associated with said metric, the number of samples of the set of training samples whose values are comprised within said sub-range of values of the plurality of sub-ranges of values, in order to obtain a plurality of counted numbers for said metric, each counted number of the plurality of counted numbers being related to one of the sub-ranges of values of the plurality of sub-ranges of values;
- Training (130) the machine learning model with each obtained plurality of counted numbers.

9. Method (100) according to claim 7 or 8, wherein the plurality of sets of training samples is obtained using a sliding window over the period of idle activity according to a sliding step.

10. Method (100, 200) according to any of the preceding claims, wherein each set of samples and each set of training samples are obtained from a corresponding set of raw samples, by applying (112, 212) at least one mathematical operation to the corresponding set of raw samples.

11. Method (100, 200) according to the preceding claim, wherein the mathematical operation is a gradient.

12. Method (100, 200) according to any of the preceding claims, wherein the plurality of counted numbers is normalised.

13. Method (200) for releasing resources (12) in a high-performance computer (10) according to any of claims 1 to 6 or any of claims 10 to 12, wherein the machine learning model is trained according to any of claims 7 to 12.

14. High-performance computer (10) configured to implement a method (100, 200) according to any of the preceding claims and comprising:
- At least one node (11) comprising at least one resource (12) and being associated with at least one metric;
- A monitoring module (13), configured to collect a set of samples for each metric, each metric taking values within a range of values divided into a plurality of sub-ranges of values;
- A scheduler configured (14) to allocate at least one resource (12) to each job, to release each resource (12) allocated to each job and/or to terminate each job;
- A machine learning module (15) configured to:
• For each node (11) comprising at least one resource (12) allocated to a given job and for each metric associated with said node (11):
∘ Obtain (210) each corresponding set of samples collected by the monitoring module (13);
∘ Count (220), for each sub-range of values of the plurality of sub-ranges of values associated with the metric, a number of samples of the set of samples whose values are comprised within said sub-range of values, in order to obtain a plurality of counted numbers for said metric, each counted number of the plurality of counted numbers being related to one of the sub-ranges of values of the plurality of sub-ranges of values;
• Determine (230) using at least one machine learning model, based on the plurality of obtained counted numbers whether the job is active or inactive;
• If the job is determined as inactive, emit (240) a termination command to terminate the job.

15. Computer program product comprising instructions which, when the program is executed by a computer, causes the computer to carry out the method (200) according to any of claims 1 to 6 or any of claims 10 to 12, the method (100) according to any of claims 7 to 12 or the method (200) according to claim 13.
